# EUROPÄISCHE PATENTANMELDUNG

(11) **EP 1 020 675 A1**
(43) Veröffentlichungstag der Anmeldung: **19.07.2000**
(21) Anmeldenummer: 00100423.3
(22) Anmeldetag: 10.01.2000
(51) Int. Cl.: F16L 19/065, F16L 33/22

(54) **Verfahren zur Befestigung eines Rohres an einem Bauteil, Anordnung dazu sowie Rohrverbindung mit derselben**

(30) Priorität: 11.01.1999 DE 19900540
(71) Anmelder: F. X. Bachmann AG, 6304 Zug (CH)
(72) Erfinder: Bachmann, Franz Xaver, 6304 Zug (CH)
(74) Vertreter: Blum, Rudolf Emil Ernst

(57) **Zusammenfassung**

Bei einer Verbindung eines Rohres (4) mit einem Stützkörper (1) wird ein Pressring (5) eingesetzt, welcher durch eine Schraubhülse (6) durch deren axiale Bewegung über den Pressring (5) zusammengepresst wird, wenn die Schraubhülse (6) auf ein Gewinde (8) des Stützkörpers (1) aufgeschraubt wird. Auf diese Weise ergibt sich die hochwertige Verbindung durch Axialverpressung mittels einer mit einfachen Werkzeugen aufschraubbaren Schraubhülse (6), wobei diese durch Sicherungsmittel (11,15,22') gegen selbsttätiges Lösen gesichert ist.

## Beschreibung

Die Erfindung betrifft ein Verfahren zur Befestigung eines Rohres an einem Bauteil gemäss Oberbegriff des Anspruchs 1 bzw. 3. Ferner betrifft die Erfindung eine Anordnung zur Befestigung eines Rohres an einem Bauteil gemäss Oberbegriff des Anspruchs 8 bzw. 11. Weiter betrifft die Erfindung eine Rohrverbindung gemäss Oberbegriff des Anspruchs 12 bzw. 16.

Es sind verschiedene Arten zur Verbindung von Rohren mit Bauteilen im Anwendungsbereich von Sanitärinstallationen, Heizungsinstallationen, Gasinstallationen usw. bekannt, wobei es sich bei den Bauteilen um irgendwelche Bauteile bekannter Art, wie Kupplungen, T-Stücke, Verteiler, Armaturen usw. handeln kann. Als Rohre kommen in diesen Anwendungsbereichen Kunststoffrohre, Kunststoff-Verbundrohre und auch Metallrohre zur Anwendung.

Qualitativ hochwertige, gegen selbständiges Lösen gesicherte Verbindungen ohne den Einsatz von O-Ringen, welche als potentielle Fehlerquelle möglichst vermieden werden sollten, werden durch axiale Verpressungsverbindungen erreicht, bei welchen ein Pressring durch ein axial verschiebbares Überwurfelement zusammen mit dem Rohr verformt wird, z.B. gemäss EP-A-0 848 200. Für die Herstellung solcher Verbindungen sind indes spezielle, in der Regel hydraulisch betätigte, Verpressungswerkzeuge vonnöten, welche aufgrund ihrer Kosten den professionellen Anwendern vorbehalten bleiben und auch dort häufig nur in geringen Stückzahlen vorhanden sind, so dass sie unter Umständen am gewünschten Einsatzort nicht oder jedenfalls nicht sofort zur Verfügung stehen.

Bekannt sind ferner radiale Verpressungen unter Verwendung von O-Ringen als Dichtungsmaterialien sowie Verschraubungen mit an Flanschen angreifenden Überwurfmuttern und Dichtungen oder mit geschlitzten Spannringen und O-Ringen. Die Verschraubung ist mit normalen Handwerkzeugen ausführbar, ergibt aber eine gegenüber der axialen Verpressung qualitativ nicht gleichwertige Verbindung, welche insbesonders der Gefahr unterliegt, dass sich die Verbindung von selber wieder löst und damit undicht wird, z.B. durch temperaturschwankungsbedingte und/oder druckschwankungsbedingte Rohrlängenveränderungen innerhalb der Installation. Insbesondere für solche Rohrverbindungen, welche nach ihrer Installation an unzugängliche Stellen zu liegen kommen, ist daher die bekannte Schraubverbindung nicht zulässig und es sollte eine hochwertige Verbindung mit hoher Sicherheit gewählt werden. Besonders für den Selbstbau- und Heimwerkerbereich kommt indes die hochwertige axiale Verpressung aufgrund des geschilderten apparativen Aufwandes kaum in Frage.

In der DE-U-296 207 wird vorgeschlagen, eine Verpressung einer Spannhülse durch eine Überwurfmutter zu bewirken, so dass grundsätzlich die Vorteile der axialen Verpressung ohne apparativen Aufwand erzielt werden können. Die Anordnung gemäss diesem Gebrauchsmuster ergibt aber keine genügende Sicherung gegen ein späteres selbständiges Lösen der Überwurfmutter, da sich diese alleine oder zusammen mit der Spannhülse losdrehen kann, da die von den erwähnten Rohrlängenveränderungen in der Installation herrührenden Kräfte erheblich sind. Ferner stellt sich bei der gezeigten Anordnung das Problem, dass beim Aufschrauben der Überwurfmutter - im Gegensatz zur Axialverpressung - zunächst aufgrund der Reibungskräfte eine Mitdrehung bzw. Torsion des Rohres erfolgen wird, was das spätere Losdrehen der Überwurfmutter besonders begünstigt.

Der Erfindung liegt deshalb die Aufgabe zugrunde, ein Verbindungsverfahren zu schaffen, das trotz der einfachen Ausführbarkeit ohne Spezialwerkzeuge eine sichere Verbindung ohne Gefahr des selbständigen Lösens ergibt.

Diese Aufgabe wird bei einem Verfahren der eingangs genannten Art mit den kennzeichnenden Merkmalen des Anspruchs 1 gelöst.

Dadurch, dass eine axiale Verpressung mit einem geschlossenen Pressring durch ein schraubbares Überwurfteil erzeugt wird, wird die hochwertige Axialverpressung mit der einfachen Verschraubungsmöglichkeit kombiniert, so dass mittels einfachster Werkzeuge (Gabelschlüssel, Rohrzangen) eine hochwertige Verbindung erzeugbar ist, die ferner durch die Schaffung einer besonderen Sicherung gegen unbeabsichtigtes Lösen des Überwurfteiles in Installationen sicher nutzbar ist, indem der Pressring einen an der Schraubhülse angreifenden Sicherungsteil und einen Anschlag für die Rohrstirnseite aufweist. Bevorzugterweise wird der Sicherungsteil durch einen am hinteren Ende der Schraubhülse vorstehenden Teil des Pressringes gebildet.

Eine sichere Verbindung kann ferner erzielt werden, bzw. die oben genannte Aufgabe gelöst werden, wenn die Losdrehkraft auf die Schraubpressverbindung möglichst gering gehalten wird. Gemäss der Lösung von Anspruch 3 ist dies bei einer Schraubpressverbindung der eingangs genannten Art dann der Fall, wenn eine Verdrehsicherung eine Torsion des Rohres beim Aufschrauben der Schraubhülse möglichst vermeidet. Diese Lösung kann zusammen mit der Sicherung gegen selbsttätiges Lösen gemäss Anspruch 1 oder für sich alleine vorgesehen sein.

Besonders bevorzugt ist es, wenn gemäss Anspruch 4 Mittel vorgesehen sind, die zu Beginn der Pressbewegung ein Andrücken des Rohres gegen die Verdrehsicherung bewirken, so dass von Anfang an ein Mitdrehen des Rohres bzw. dessen Torsion unterbunden wird.

Der Erfindung liegt ferner die Aufgabe zugrunde Anordnungen zur Befestigung eines Rohres an einem Bauteil zu schaffen, welche die genannten Nachteile nicht aufweisen.

Dies wird durch Anordnungen mit den kennzeichnenden Merkmale der Ansprüche 8 bzw. 11 erreicht.

Ferner liegt der Erfindung die Aufgabe zugrunde, Rohrverbindungen zu schaffen, welche die genannten Nachteile nicht aufweisen.

Dies wird mit Rohrverbindungen mit den kennzeichnenden Merkmalen der Ansprüche 14 bzw. 16 erreicht.

Im folgenden werden Ausführungsbeispiele der Erfindung anhand der Zeichnungen näher erläutert. Dabei zeigt
Figur 1 eine schematische Vertikalschnittdarstellung durch eine Rohrverbindung mit weggenommener Schraubhülse;
Figur 2 die Rohrverbindung nach Figur 1 im verschraubten Zustand; und
Figur 3 eine weitere Ausführungsform der Rohrverbindung in ähnlicher Darstellung wie Figur 1.

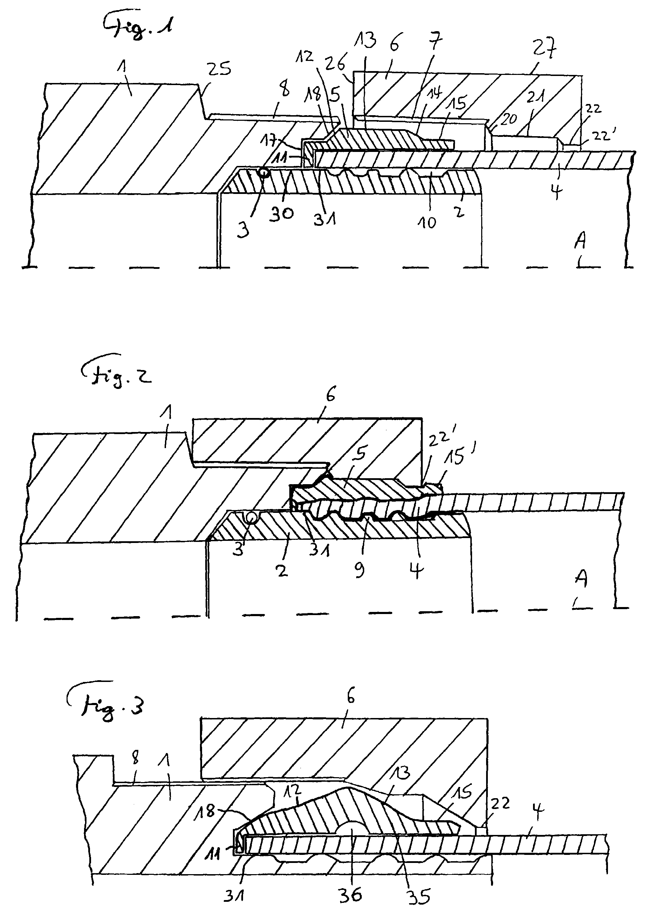

Figur 1 zeigt schematisch in einem Vertikalquerschnitt in nicht massstäblicher Form eine Rohrverbindung, wobei zur Vereinfachung der Zeichnung nur die oberhalb der Längsachse A des Rohres befindlichen Teile des Rohres und der Verbindung dargestellt sind. Die Figur zeigt dabei die Verbindung des Rohres 4 mit einem Bauteil, welches einen Stützkörper 1 und eine Stützhülse 2 aufweist. Das Bauteil kann irgend ein bekanntes Installationsbauteil wie eine Kupplung, ein T-Stück, ein Verteiler oder eine Armatur sein. Das Rohr 4 kann ein Kunststoffrohr, ein Kunststoffverbundrohr oder auch ein Metallrohr sein, wie bei Sanitärinstallationen, Heizungsinstallationen, Gasinstallationen oder anderen Installationen verwendet werden.

Im gezeigten Beispiel ist das Bauteil zweiteilig aus Stützkörper 1 und Stützhülse 2 gebildet, wobei die Stützhülse 2 in den Stützkörper 1 eingepresst ist, allenfalls unter Einschluss eines O-Ringes 3. Eine Rändelung 30 kann an der Stützhülse 2 vorgesehen sein, um eine zusätzliche Verdrehsicherung für die Stützhülse 2 im Stützkörper 1 zu bilden. Der Stützkörper und die Stützhülse könnten aber auch einstückig ausgebildet sein. Das Rohr 4 ist auf die Stützhülse 2 aufgeschoben und auf das Rohr 4 ist ein geschlossener, also ungeschlitzter Pressring 5 aufgeschoben. Im gezeigten Beispiel ist der Pressring 5 so ausgeführt, dass er an seiner zum Stützkörper 1 hinweisenden Vorderseite einen Kragen 11 aufweist, der einen Anschlag für die Stirnseite des Rohres 4 bildet. Der Kragen 11 erleichtert dabei die Positionierung des Pressringes 5 auf dem Rohr 4 beim Zusammenfügen der Rohrverbindung und bildet andererseits ein Element der Sicherung gegen selbsttätiges Lösen des nachfolgend erwähnten Überwurfteiles, was noch erläutert wird. Das Rohr und der Pressring 5 sind mit ihren Vorderbereichen in einer Ausnehmung 17 des Stützkörpers angeordnet, welche eine vorzugsweise schräg nach aussen hin verlaufende Flanke 18 aufweist.

Am Stützkörper 1 ist ein Aussengewinde 8 angeordnet, welches zum Zusammenwirken mit einem Innengewinde 7 des Überwurfteils 6 ausgebildet ist, wobei das Überwurfteil 6 erfindungsgemäss von einer Schraubhülse gebildet wird. Die Schraubhülse 6 ist in der Figur 1 noch nicht im Eingriff mit ihrem Gegengewinde 8 am Stützkörper gezeigt. Zur Herstellung der Rohrverbindung wird die Schraubhülse mit ihrem Innengewinde 7 mit dem Gewinde 8 am Stützkörper in Verbindung gebracht und dann auf den Stützkörper aufgeschraubt. Zu diesem Zweck ist die Schraubhülse an ihrer Aussenseite mit Flächen 27 versehen, welche Angriffsflächen für ein Werkzeug, z.B. einen Gabelschlüssel oder eine Rohrzange bilden. Das Aufschrauben der Schraubhülse 6 erfolgt dabei so lange, bis die Schraubhülse mit ihrer Vorderseite 26 an einer Anschlagfläche 25 des Stützkörpers anschlägt. Der Verschraubungsweg der Schraubhülse 6 ist dabei so gewählt, dass sich beim Aufschrauben bis zum Anschlag 25 eine vollständige Verpressung des Pressringes 5 und des Rohres 4 durch die Axialbewegung der Schraubhülse ergibt.

In dem gezeigten Beispiel ist an dem Pressring 5 eine erste Schräge 14 ausgebildet, welche bei der Axialverschiebung der Schraubhülse mit deren Innenfläche 20 in Kontakt tritt. Durch das Auflaufen der Innenfläche 20 an der Fläche 14 ergibt sich ein erstes Nachvorneschieben und Verpressen des Pressringes bzw. ein erster Abdichtungsvorgang. Es wird dabei dessen vordere Fläche 12 gegen die Rampe 18 des Stützkörpers 1 gepresst und der Pressring, welcher im gezeigten Beispiel vorzugsweise aus Kunststoff besteht, wird dadurch verformt und verformt seinerseits den vorderen Bereich des Rohres 4. Beim weiteren Aufschrauben der Schraubhülse 6 bzw. bei deren weiteren Axialverschiebung über den Pressring 5 kommt die Pressfläche 21 der Schraubhülse 6 ebenfalls zunächst mit der Fläche 14 und dann mit der Verpressungsfläche 13 des Pressringes 5 in Kontakt. Durch die Pressfläche 21 werden dabei der Pressring 5 und damit auch das Rohr 4 entlang des gesamten Mittelbereiches des Pressringes 5 verpresst und in engen Kontakt mit der Stützhülse gebracht. Der Pressring 5 und das Rohr verformen sich dabei und das Rohr 4 fügt sich mit seinem Material in die Erhöhungen und Vertiefungen 9 bzw. 10 der Stützhülse ein, so dass sich eine sehr gute Abdichtung zwischen Rohr 4 und Stützhülse 2 ergibt, wie das an sich von der herkömmlichen Axialverpressung her bekannt ist. Durch das Aufschrauben der Schraubhülse 6 auf den Stützkörper 1 ergibt sich somit eine sehr dichte, hochwertige Verbindung des Rohres mit dem Stützkörper, wobei diese Verbindung auf einfache Weise durch Aufschrauben der Schraubhülse erzielt werden kann.

An der Schraubhülse und am Pressring 5 sind Mittel vorgesehen, welche eine besondere Sicherung gegen das Lösen der Schraubhülse 6 bilden. Bevorzugterweise ist dazu bei der Schraubhülse 6 eine Endfläche 22 vorgesehen, welche eine Öffnung mit geringerem Durchmesser bzw. Umfang definiert, als der Durchmesser bzw. der Aussenumfang der Sicherungsfläche 15 des Pressringes 5. Diese Sicherungsfläche 15 ist ferner so ausgestaltet, dass sie so weit nach hinten auf das Rohr ragt, dass sie bei voll auf den Stützkörper 1 aufgeschraubter Schraubhülse 6 über das hintere Ende der Schraubhülse 6 hinausragt. Beim Aufschrauben der Schraubhülse 6 drückt die Endfläche 22 die ringförmige Sicherungsfläche 15, welche z.B. bei einem Pressring aus Kunststoffmaterial einen um ein Millimeter grösseren Durchmesser aufweist, als der Innendurchmesser der Fläche 22 der Schraubhülse, die Fläche 15 zunächst zusammen. Diejenigen Endbereiche der Fläche 15 (15' in Figur 2), welche danach aber bei vollständig aufgeschraubter Schraubhülse an deren hinteren Ende vorstehen, weiten sich aufgrund der Elastizität des Kunststoffmaterials nach Wegfall der Pressung wieder auf. Es kann dabei annähernd wieder der ursprüngliche Durchmesser erreicht werden; jedenfalls ergibt sich durch das Aufweiten eine Sicherung gegen ein Zurückschrauben der Schraubhülse, da der nun wieder freiliegende, aufgeweitete Endbereich des Pressringes 5 für die Hinterkante 22' der Schraubhülse ein Hindernis bildet. Die Mittel zur Sicherung umfassen ferner den Kragen 11, welcher die Stirnseite des Rohres übergreift und damit ein Zurückgleiten des Pressringes 5 sicher verhindert, so dass sich kein selbsttätiges Lösen der Schraubhülse unter Mitnahme des Pressringes ergeben kann. Auf diese Weise kann auf einfache Art eine Sicherung gegen unbeabsichtigtes Lösen der Rohrverbindung im Betrieb erzielt werden. Die Sicherung auf diese Weise ergibt ferner eine optische Kontrolle über das genügende Aufschrauben der Schraubhülse, da der hintere Teil des Pressringes sichtbar wird und damit eine optische Anzeige für das genügende Aufschrauben ergibt. Die Rohrverbindung ist indes trotzdem mittels Werkzeug wieder lösbar, da der Widerstand des aufgeweiteten Pressringes 5 ein Lösen der Verschraubung mit genügendem Kraftaufwand dennoch erlaubt. Dabei wird zwar der Pressring zerstört, aber der Stützkörper und die Schraubhülse stehen für weitere Einsätze zur Verfügung.

Anstelle des beschriebenen Sicherungsteils 15 bzw. 15' können aber z.B. auch auf anderen Abschnitten des Pressringes vorstehende Ringe oder Nasen vorgesehen sein, die sich nach der Verpressung wieder aufweiten und in entsprechende, in der Schraubhülse vorgesehene Nuten eingreifen. Der durch den Kragen 11 gebildete Sicherungsteil ist in diesem Fall natürlich auch vorgesehen.

Die Stützhülse weist im Bereich der Rohrauflage ebenfalls einen Bereich mit erhöhter Griffigkeit, z.B. in Form einer Rändelung 31 auf, welchen Bereich eine Verdrehsicherung für das Rohr bildet. Diese gelangt bereits in der ersten Verpressungsphase mittels der Flächen 14 und 20 in sicheren Kontakt mit dem vorderen Ende des Rohres, so dass sich eine Verhinderung des Verdrehens des Rohres ergibt, indem die Schräge 12 des Pressringes bereits zu Beginn der Verpressung an der Schräge 18 des Stützkörpers aufläuft, wodurch ein Anpressen der Rohrinnenseite gegen die Rändelung 31 erfolgt, wodurch ein Mitdrehen des Rohres bzw. dessen Torsion zu Beginn des Aufschraubens des Überwurfteils sicher verhindert wird, was wiederum ein Lockern des Überwurfteils weniger wahrscheinlich macht. Die Rändelung 31 kann dabei durchgehend mit der Rändelung 30 der Stützhülse im Bereich des Stützkörpers verbunden sein.

Figur 2 zeigt schematisch die Verhältnisse bei aufgeschraubter Schraubhülse 6, wobei gleiche Bezugszeichen gleiche Teile wie in Fig. 1 bezeichnen. Ersichtlich ist in Figur 2 die Verpressung des Rohres und des Pressringes sowie die Sicherung gegen Lösen der Schraubhülse durch das vorstehende, aufgeweitete Ende des Pressringes 5 und den Kragen 11.

Figur 3 zeigt schematisch eine weitere Ausführungsform, bei welcher ein Pressring 35 vorgesehen ist, welcher aus Metall besteht. Die Verpressung dieses ebenfalls ungeschlitzten, geschlossenen Pressringes erfolgt dabei grundsätzlich auf dieselbe Weise wie dies anhand des Pressringes 5 anhand der Figuren 1 und 2 erläutert worden ist. Der metallene Pressring 35 kann dabei eine Ausnehmung 36 aufweisen, welche das Verpressen erleichtert. Auch bei einem metallenen Pressring kann die Verschraubungssicherung durch den am hinteren Teil vorstehenden Pressringbereich erzielt werden. Auch bei einem metallenen Pressring ergibt sich ein, wenn auch geringfügiges, Aufweiten nach dem Durchgang der Quetschfläche 22. Gleiche Bezugszeichen wie in den Figuren 1 und 2 bezeichnen dabei in Figur 3 gleiche Teile. Insbesondere ist ebenfalls ein Kragen 11 und eine Verdrehsicherung 31 vorgesehen.

Am Pressringende können Nuten oder andere Rauhigkeiten und/oder eine leichte, nach hinten sich erstreckende, aufwärtsführende Schräge vorgesehen sein, an welchen der Pressring eingreift.

Der Pressring kann generell aus allen Materialien bestehen, die für Pressringe geeignet sind und jeweils entsprechend dem Anwendungsgebiet ausgewählt werden. Auch der Stützkörper kann z.B. aus Metall oder Kunststoff oder einem Metall/Kunststoff-Verbund bestehen, wobei in der Regel das Gewinde 8 sowie Angriffsflächen für ein Werkzeug aus Metall bestehen werden.

## Patentansprüche

1. Verfahren zum Befestigen eines Rohres (4) an einem Bauteil, das einen Stützkörper (1) und eine zur Einführung in das Rohr bestimmte Stützhülse (2) umfasst, wobei über dem Rohr im Bereich der in dieses eingeführten Stützhülse ein geschlossener Pressring (5, 35) angeordnet und auf diesen durch ein axial bewegtes Überwurfteil (6) eine Kraft ausgeübt wird, die eine radiale Verformung des Rohres und des Pressringes bewirkt, und wobei das Überwurfteil (6) eine Schraubhülse ist, die durch Aufschrauben auf das Bauteil (1, 2) in axialer Richtung über den Pressring (5, 35) bewegt wird, dadurch gekennzeichnet, dass eine Sicherung der aufgeschraubten Schraubhülse gegen selbsttätiges Lösen derselben durch einen an der Schraubhülse (6) angreifenden Sicherungsteil (15*'*) des Pressringes und einen Anschlagteil des Pressringes für die Stirnseite des Rohres, insbesondere in der Form eines Kragens (11, 11*'*), erfolgt.

2. Verfahren nach Anspruch 1, dadurch gekennzeichnet, dass der Sicherungsteil durch ein am hinteren, bauteilabgewandten Ende der aufgeschraubten Schraubhülse vorstehenden Abschnitt (15*'*) des Pressringes gebildet wird.

3. Verfahren zum Befestigen eines Rohres (4) an einem Bauteil, das einen Stützkörper (1) und eine zur Einführung in das Rohr bestimmte Stützhülse (2) umfasst, wobei über dem Rohr im Bereich der in dieses eingeführten Stützhülse ein geschlossener Pressring (5, 35) angeordnet und auf diesen durch ein axial bewegtes Überwurfteil (6) eine Kraft ausgeübt wird, die eine radiale Verformung des Rohres und des Pressringes bewirkt, und wobei das Überwurfteil (6) eine Schraubhülse ist, die durch Aufschrauben auf das Bauteil (1, 2) in axialer Richtung über den Pressring (5, 35) bewegt wird, insbesondere nach einem der Ansprüche 1 oder 2, dadurch gekennzeichnet, dass mittels einer an der Stützhülse vorgesehenen Verdrehsicherung (31) eine Torsion des Rohres beim Aufschrauben der Schraubhülse vermieden wird.

4. Verfahren nach Anspruch 3, dadurch gekennzeichnet, dass Mittel vorgesehen sind, die bereits zu Beginn der Pressbewegung ein Andrücken des Rohres gegen die Verdrehsicherung bewirken, insbesondere dass das Rohr und der Pressring mit ihren Vorderbereichen in einer Ausnehmung (17) des Stützkörpers angeordnet sind, die eine schräg nach aussen hin verlaufende Flanke (18) aufweist, derart, dass zu Beginn der Pressbewegung durch die Flanke (18) ein Andrücken des Rohres gegen die Verdrehsicherung bewirkt wird.

5. Verfahren nach einem der Ansprüche 1 bis 4, dadurch gekennzeichnet, dass beim Aufschrauben der Schraubhülse ein erster Abdichtungsvorgang bewirkt wird, bei welchem ein vorderer Abschnitt (11, 12) des Pressringes gegen den Stützkörper gepresst wird, indem eine Flanke des Pressringes (5) durch eine erste, vorzugsweise schräg verlaufende, Innenfläche (20) der Schraubhülse (6) beaufschlagt wird.

6. Verfahren nach einem der Ansprüche 1 bis 5, dadurch gekennzeichnet, dass beim Aufschrauben der Schraubhülse ein zweiter Abdichtungsvorgang bewirkt wird, indem ein mittlerer Teil (13) des Pressringes durch eine zweite, vorzugsweise gerade verlaufende Innenfläche (21) der Schraubhülse beaufschlagt wird.

7. Verfahren nach einem der Ansprüche 1 bis 6, dadurch gekennzeichnet, dass beim Aufschrauben der Schraubhülse ein dritter Abdichtungsvorgang bewirkt wird, indem ein hinterer Abschnitt (15) des Pressringes durch eine dritte Innenfläche (22) der Schraubhülse beaufschlagt wird.

8. Anordnung zur Befestigung eines Rohres (4) an einem Bauteil, welches einen Stützkörper (1) mit Gewinde (8) und eine zur Einführung in das Rohr bestimmte Stützhülse (2) aufweist, wobei die Anordnung einen geschlossenen Pressring (5) und eine darauf abgestimmte Schraubhülse (6) aufweist, welche zum Eingriff in das Gewinde (8) des Bauteiles (1, 2) ausgestaltet und mit mindestens einer zur Verformung des Pressringes und des Rohres bestimmten Innenfläche (20, 21, 22) versehen ist, dadurch gekennzeichnet, dass die Anordnung eine Sicherung der aufgeschraubten Schraubhülse gegen selbsttätiges Lösen derselben durch einen an der Schraubhülse (6) angreifenden Sicherungsteil (15') des Pressringes und einen zum Übergreifen der Rohrstirnseite bestimmten Anschlagteil des Pressringes, insbesondere einen Kragen (11, 11'), aufweist.

9. Verfahren nach Anspruch 8, dadurch gekennzeichnet, dass der Sicherungsteil durch ein am hinteren, bauteilabgewandten Ende der aufgeschraubten Schraubhülse vorstehenden Abschnitt (15') des Pressringes gebildet wird.

10. Anordnung nach Anspruch 8 oder 9, dadurch gekennzeichnet, dass die Schraubhülse an ihrem hinteren Ende mit einer Quetschfläche (22) für den Pressring versehen ist, die den engsten Durchgang durch die Schraubhülse bildet.

11. Anordnung zur Befestigung eines Rohres (4) an einem Bauteil, welches einen Stützkörper (1) mit Gewinde (8) und eine zur Einführung in das Rohr bestimmte Stützhülse (2) aufweist, wobei die Anordnung einen geschlossenen Pressring (5) und eine darauf abgestimmte Schraubhülse (6) aufweist, welche zum Eingriff in das Gewinde (8) des Bauteiles (1, 2) ausgestaltet und mit mindestens einer zur Verformung des Pressringes und des Rohres bestimmten Innenfläche (20, 21, 22) versehen ist, insbesondere nach einem der Ansprüche 8 bis 10, dadurch gekennzeichnet, dass die Stützhülse eine am Rohr angreifende Verdrehsicherung, insbesondere eine Rändelung oder Riffelung (31) aufweist.

12. Anordnung nach Anspruch 11, gekennzeichnet durch Mittel, die ein Andrücken des Rohres gegen die Verdrehsicherung bereits zu Beginn des Pressvorganges bewirken.

13. Anordnung nach Anspruch 12, dadurch gekennzeichnet, dass der Pressring an seinem vorderen Bereich mit einer ansteigenden Flanke (12) versehen ist und dass der Stützkörper (1) und die Stützhülse (2) eine zur Aufnahme des Pressringes und des Rohres bestimmte Ausnehmung (17) bilden, die eine nach aussen hin schräg verlaufende Flanke (18) aufweist.

14. Rohrverbindung umfassend ein mit dem Rohr zu verbindendes Bauteil (1, 2) mit einem rohrseitigen Gewinde (8) und einer Stützhülse (2), welche zur Aufnahme der Rohrinnenseite bestimmt ist, einen geschlossenen Pressring (5) sowie eine auf diesen abgestimmte Schraubhülse (6) mit einem zum Zusammenwirken mit dem Gewinde (8) des Bauteils ausgestalteten Gewinde (7) und mit mindestens einer Innenfläche (20, 21, 22), die zur Verpressung des Pressringes und des Rohres ausgestaltet ist, dadurch gekennzeichnet, dass sie eine Sicherung (15*'*) gegen selbsttätiges Lösen der Schraubhülse umfasst.

15. Rohrverbindung nach Anspruch 14, dadurch gekennzeichnet, dass die Anordnung eine Sicherung der aufgeschraubten Schraubhülse gegen selbsttätiges Lösen derselben durch einen an der Schraubhülse (6) angreifenden Sicherungsteil (15') des Pressringes und einen zum Übergreifen der Rohrstirnseite bestimmten Anschlagteil des Pressringes, insbesondere einen Kragen (11, 11'), aufweist.

16. Rohrverbindung umfassend ein mit dem Rohr zu verbindendes Bauteil (1, 2) mit einem rohrseitigen Gewinde (8) und einer Stützhülse (2), welche zur Aufnahme der Rohrinnenseite bestimmt ist, einen geschlossenen Pressring (5) sowie eine auf diesen abgestimmte Schraubhülse (6) mit einem zum Zusammenwirken mit dem Gewinde (8) des Bauteils ausgestalteten Gewinde (7) und mit mindestens einer Innenfläche (20, 21, 22), die zur Verpressung des Pressringes und des Rohres ausgestaltet ist, insbesondere nach Anspruch 14 oder 15, dadurch gekennzeichnet, dass die Stützhülse eine Verdrehsicherung für das Rohr aufweist.

17. Rohrverbindung nach Anspruch 16, dadurch gekennzeichnet, dass sie Mittel zum Anpressen des Rohres gegen die Verdrehsicherung bereits zu Beginn der Pressung aufweisen, insbesondere, dass der Pressring (5, 35) einen vorderen ansteigenden Abschnitt (12) und dass der Stützkörper (1) eine schräge, insbesondere konische Flanke (18) aufweist, welche zusammenwirkend zur Pressung des Rohranfangs gegen die Verdrehsicherung ausgestaltet sind.
